# EUROPÄISCHE PATENTANMELDUNG

(11) **EP 3 229 185 A1**
(43) Veröffentlichungstag der Anmeldung: **11.10.2017**
(21) Anmeldenummer: 17161793.9
(22) Anmeldetag: 20.03.2017
(51) Int. Cl.: G06Q 10/06, B66C 13/48, B66C 15/04, G09B 9/042, G06Q 50/08

(54) **SYSTEM ZUR DIGITALEN UNTERSTÜTZUNG EINES ARBEITSPROZESSES**

(30) Priorität: 08.04.2016 DE 102016004264
(71) Anmelder: Liebherr-Werk Nenzing GmbH, 6710 Nenzing (AT)
(72) Erfinder: Flir, Marcel, 6800 Feldkirch (AT); Schneider, Christian, 6824 Schlins (AT); Mai, Christoph, 6850 Dornbirn (AT); Vallaster, Sebastian, 6781 Bartholomäberg (AT)
(74) Vertreter: Laufhütte, Dieter

(57) **Zusammenfassung**

Die vorliegende Erfindung betrifft ein System zur digitalen Unterstützung eines Arbeitsprozesses, umfassend: eine Datenbank zur Aufnahme von verschiedenen Daten und Datentypen, ein Mittel zur Planung eines Arbeitsprozesses, das einen Zugriff auf die Datenbank aufweist und dazu ausgelegt ist, einen Arbeitsplan in der Datenbank abzulegen, wobei der Arbeitsplan vorzugsweise die Konfiguration einer Maschine, eine Beschreibung der Arbeitsumgebung und mehrere Ablaufschritte umfasst, ein Mittel zur Analyse des Arbeitsplans, das anhand der vorliegenden Daten der Datenbank eine Analyse durchführt, um eine Optimierung des in der Datenbank abgelegten Arbeitsplans, insbesondere einzelner Ablaufschritte des Arbeitsplans vorzunehmen, ein Mittel zur Simulation des Arbeitsplans, das einen Zugriff auf die Datenbank aufweist und dazu ausgelegt ist, Daten zur Simulation des Arbeitsplans auszugeben, und ein Mittel zur Navigations- und Steuerungsunterstützung einer Maschine, das einen Zugriff auf die Datenbank aufweist und dazu ausgelegt ist, während und/oder vor der realen Umsetzung des Arbeitsplans spezifische Daten des Arbeitsplans aus der Datenbank an eine zugehörige Maschine zu übermitteln.

## Beschreibung

### Technisches Gebiet

Die vorliegende Erfindung betrifft ein System zur digitalen Unterstützung eines Arbeitsprozesses sowie ein entsprechendes Verfahren zu dessen Durchführung. Das System unterstützt Krane und Baumaschinen. Vorzugsweise ist die Maschine eine Baumaschine oder ein Kran und besonders vorzugsweise ein Raupenkran, ein Hydroseilbagger, ein Ramm- oder Bohrgerät, ein Offshore-Kran, ein Schiffskran und/oder ein Hafenmobilkran.

### Stand der Technik

Herkömmlicherweise wird ein Arbeitsprozess bei größeren Vorhaben einem aufwendigen Planungsprozess unterzogen. Als erstes wird ein georeferenziertes 3D-Geländemodell erstellt, das das Gelände, auf dem der Arbeitsprozess stattfinden soll, abbildet. Ausgehend von diesen Informationen wird ein Arbeitsplan erstellt, an Partner und Mitarbeiter anderer Gewerke weitergereicht wird. Diese planen auf Grundlage der ihnen weitergereichten Unterlagen.

Problematisch an diesem Vorgehen ist, dass Änderungen nicht mit Sicherheit an die Planer weitergereicht werden und daraus resultierende Änderungen nicht zwangsläufig Eingang in den Arbeitsplan finden.

Durch im Stand der Technik übliche Vorgehen können Änderungen leicht untergehen. So ist beispielsweise möglich, dass ein Hebe-Einsatz mit mehreren Kranen nur als Papier- Dokument existiert und alle Maschinenbediener mündlich instruiert werden. Während des Hebe-Einsatzes werden die Fahrer einzeln mündlich über die jeweilig notwendigen Fahrbewegungen des einzelnen Krans instruiert. Der Bediener führt nur einzelne Anweisungen aus, ohne den zugrunde liegenden Arbeitsplan umfassend zu kennen. Auch kann vorkommen, dass die von verschiedenen Gewerken stammenden Teilarbeitspläne nicht optimal aufeinander abgestimmt sind.

Wie am Beispiel eines Krans ersichtlich, kann daher vorkommen, dass bei ungenauer Annahme der Rahmenbedingungen, die Planung des Hebe-Einsatzes insbesondere der Parameter Traglast, Masse, Schwerpunkt oder geometrischer Abmaße neu durchgeführt werden muss. Zudem sind die Prozesse nicht durchgängig dokumentiert und eine Analyse der Schwachstellen im Nachhinein ist nicht möglich.

### Erfindung

Die vorliegende Erfindung überwindet die aus dem Stand der Technik herrührenden Nachteile, indem sie eine direkte, medienbruchsfreie Überführung des Arbeitsplans aus dem Mittel der Planung in das Mittel der Simulation bzw. in das Mittel der Navigation- und Steuerungsunterstützung ermöglicht. Durch die Erfindung werden die Nachteile des Stands der Technik überwunden. Es ist möglich, einen Arbeitsplan an einen anderen Planer weiterzureichen, so dass der Arbeitsplan entweder für den Ersteller gesperrt oder der Arbeitsplan in einem kooperativen Modus gemeinsam von beiden Seiten bearbeitet wird. Nach der finalen Bearbeitung des Arbeitsplans wird dieser an die einzelnen Bediener von Maschinen bzw. die Koordinatoren des Arbeitsprozesses übermittelt.

Das System zur digitalen Unterstützung eines Arbeitsprozesses nach dem Anspruch 1 umfasst eine Datenbank zur Aufnahme von verschiedenen Daten und Datentypen, ein Mittel zur Planung eines Arbeitsprozesses, das einen Zugriff auf die Datenbank aufweist und dazu ausgelegt ist, einen Arbeitsplan in der Datenbank abzulegen, wobei der Arbeitsplan vorzugsweise die Konfiguration einer Maschine (inklusive Werkzeugen wie Haken oder Spezialtiefbau-Werkzeugen), eine Beschreibung der Arbeitsumgebung inkl. ein optionalen Last sowie mehrere Arbeitsschritte umfasst und ein Mittel zur Simulation des Arbeitsplans, das einen Zugriff auf die Datenbank aufweist und dazu ausgelegt ist, Daten zur Simulation des Arbeitsplans auszugeben und ein Mittel zur Navigations- und Steuerungsunterstützung einer Maschine, das einen Zugriff auf die Datenbank aufweist und dazu ausgelegt ist, während und/oder vor der realen Umsetzung des Arbeitsplans spezifische Daten des Arbeitsplans aus der Datenbank an eine zugehörige Maschine zu übermitteln sowie ein Mittel zur Analyse des Arbeitsplans, das anhand der vorliegenden Daten der Datenbank eine Analyse durchführt, um eine Optimierung vorzunehmen, insbesondere des Arbeitsplans, der Maschine oder des Fahrverhaltens des Bedieners.

Dabei ist die Datenbank ein lokal oder in einer Cloud vorhandener Speicherort zum Ablegen und Anfragen von Daten. Dadurch ist es möglich, dass jede am Arbeitsprozess beteiligte Partei Zugriff auf den aktuellsten Arbeitsplan hat. Insbesondere kann dadurch vorgesehen sein, dass das Gelände, auf dem der Arbeitsprozess verwirklicht werden soll, in digitaler Weise der Datenbank zur Verfügung steht.

Das Mittel zur Planung eines Arbeitsprozesses dient zum Erstellen eines Arbeitsplans, der aus der oder den jeweiligen Maschinen (in der spezifischen Konfiguration), der Umgebung (basierend auf einem georeferenzierten 3D-Modell) und einer optionalen Last sowie den einzelnen Arbeitsschritten der Maschine besteht. Typischerweise wird in der Planung, also in der Erstellung eines Arbeitsplans, für eine spezifische Aufgabe wie z.B. ein Hebe-Einsatz die passende Maschine in der passenden Konfiguration gesucht oder durch einen erfahrenen Anwender direkt ausgewählt. Die zur Verfügung stehenden Maschinen sind dabei in der Datenbank abgelegt.

Dabei ist das System derart gestaltet, dass je nach Anwendergruppe (Mieter, Vermieter, Disponent, Planer) die für die jeweilige Anwendergruppe unterschiedlichen Anforderungen hinsichtlich Zugang, Oberfläche und Funktion bereitgestellt wird, sodass je nach Zielstellung und Anwendungsart die jeweiligen Informationen übertragen werden können. So liegt der Hauptaugenmerk eines Disponenten viel eher auf einem schnelleren und einfacheren Zugriff auf alle Maschinen und verfügbaren Konfigurationen eines Fuhrparks, wohingegen für den Planer von Wichtigkeit ist, 3D-Zeichnungen zu importieren und für alle einzelnen Ablaufschritte wie einen Arbeitsschritt bspw. eines Hubs die relevanten Parameter wie Bodendruck, Traglast, Abstand zur Umgebung etc. darstellen lassen zu können. Zudem kann das Mittel zur Planung eines Arbeitsprozesses derart ausgestaltet sein, dass ein einzelner Arbeitsschritt wie ein Hub in mehrere Arbeitsschritte unterteilt werden kann. So kann ein Hebe-Einsatz Informationen über die Krankonfiguration, die Umgebung, die Last und die jeweiligen Arbeitsschritte umfassen und so in der Datenbank abgelegt werden, dass eine später näher beschriebene Simulation auf diese Daten zugreifen kann. Mit dem Mittel der Planung kann der Einsatz von einer oder mehreren Maschinen geplant werden.

Das Mittel zur Simulation des Arbeitsplans weist einen Zugriff auf die Datenbank auf, sodass eine Simulation anhand des in der Datenbank abgelegten Arbeitsplans bzw. der Ablaufschritte des Arbeitsplans, durchführbar ist. Das Mittel zur Simulation ist demnach dazu ausgelegt, Daten, insbesondere den erzeugten Arbeitsplan, an einen Simulator weiterzugeben oder eine Simulationsumgebung selbst zu erzeugen und diese auszugeben, um einzelne Arbeitsschritte oder den gesamten Arbeitsplan zu simulieren. Es ist möglich, dass dabei konkrete Anweisungen für jeden Arbeitsschritt an den Simulator gegeben werden, sodass der Bediener des Simulators bzw. die Trainer des Simulationsvorgangs auf einen nicht ideal gestalteten Arbeitsplan (Arbeitsplans bzw. Arbeitsschritt) aufmerksam werden und daraufhin einen neuen optimierten Ablauf mit eigenen Arbeitsschritten oder einer veränderten Konfiguration definiert, der dann in der Datenbank abgespeichert wird.

Durch dieses Vorgehen können nicht optimal geplante Arbeitspläne und Arbeitsschritte schon vor der realen Ausführung erkannt werden und in einem sehr frühen Stadium optimiert werden. Grundlage hierfür ist aber, dass sowohl das Mittel zur Simulation als auch das Mittel zur Planung auf eine gemeinsame Datenbank zugreifen, auf der die Daten des Arbeitsplans abgelegt sind. Von Vorteil ist, wenn die Daten einer georeferenzierten 3D-Geländemodell ebenfalls dem Arbeitsplan zu Grunde liegen. Da hierdurch keine Probleme bei der manuellen Konvertierung oder der Aktualität der gerade verwendeten Informationen vorliegt und die Verwendung einer gemeinsamen Plattform ohne Medienbruch möglich ist, ist die Verlässlichkeit der Daten besonders groß.

Darüber hinaus weist das System ein Mittel zur Analyse des Arbeitsplans im Vergleich zu den aufgezeichneten Prozessdaten auf, das anhand der vorliegenden Daten der Datenbank eine Analyse durchführt, um zu entscheiden, ob eine Optimierung des in der Datenbank abgelegten Arbeitsplans oder eine Optimierung der Maschine durch Reparatur und/oder Wartung oder eine Optimierung des Verhaltens des Fahrers vom System vorgeschlagen wird.

Vorzugsweise können die gewonnenen Prozessdaten mit dem Arbeitsplan verglichen werden, um eine Abweichung vom Arbeitsplan zu erkennen oder Hinweise auf eine Minderleistung der Maschine zu erhalten.

Durch den Vergleich von Prozessdaten lassen sich Aussagen zur Qualität des Bedieners der Maschine, des Arbeitsplans und der Maschine treffen. Basierend auf diesen Aussagen kann das System konkrete Handlungsempfehlungen vorschlagen.

Für den Fall, dass der Bediener die Maschinen nicht optimal bedient, könnte das System eine auf die spezifische Fahrweise des Bedieners optimierte Trainingsaufgabe in der Datenbank ablegen, die dann bei Aufnahme einer Simulation des betreffenden Bedieners abgerufen wird.

Falls die Minderleistung auf einen Defekt der Maschine zurückzuführen ist, kann dieser Umstand in der Datenbank abgelegt werden, sodass das System eine Mitteilung an einen entsprechenden Techniker sendet.

Im Falle eines nicht optimal geplanten Arbeitsplans entwirft das System einen konkreten Vorschlag für eine Optimierung des Arbeitsplans. Bei der Planung des Arbeitsprozesses oder einer Überarbeitung eines bereits geplanten Arbeitsplans kann der Planer darüber entschieden, ob der ursprünglich geplante Arbeitsschritt beizubehalten oder die von dem System vorgeschlagene Optimierungsoption angewendet werden soll.

Durch das System mit den Merkmalen des Anspruchs 1 wird ein Arbeitsprozess digital unterstützt, sodass weniger Fehler oder unvorhergesehene Ereignisse eintreten und der Arbeitsprozess somit effizienter und effektiver durchgeführt werden kann.

Mit einem System nach Anspruch 1 haben alle Prozessbeteiligten den gleichen Informationsstand, der Arbeitsplan und die zugrunde liegenden Daten sind stets aktuell. Über die gemeinsame Datenbank werden alle Informationen synchronisiert. Der Datenaustausch erfolgt ohne Medienbruch.

Ein weiteres Mittel des Systems dient zur Navigation und Steuerungsunterstützung einer Maschine bei der realen Umsetzung des Arbeitsplans. Dabei wird vor und/oder während des Einsatzes ein Arbeitsplan in die Maschine geladen, die den Bediener bei der Navigation einer Maschine unterstützt.

Sind beispielsweise georeferenzierte 3D-Daten im Arbeitsplan hinterlegt, kann die genaue Position eines auszuführenden Arbeitsschritts bestimmt werden und dem Bediener eine Navigationshilfe zu diesem Punkt angeboten werden. Am Beispiel eines Krans würde dies bedeuten, dass der geplante Drehwinkel des Ober- und Unterwagens oder der Wippwinkel des Haupt- und Nadelauslegers oder die erforderliche Höhe des Hakens dem Maschinenbediener angezeigt wird. Darüber hinaus kann das System weitere zusätzliche Planungsinformationen darstellen, die dem Bediener einen besseren Überblick und eine bessere Bearbeitung eines Arbeitsschritts des Arbeitsplans ermöglichen. Beispielsweise werden das Gewicht einer zu hebenden Last und/oder die hierfür optimale Einscherung des Hakens zum Heben der Last angezeigt.

Das System umfasst ferner ein Mittel zur Aufnahme von Prozessdaten der Maschine bei der Ausführung des Arbeitsplans, die einen Zugriff auf die Datenbank aufweist und dazu ausgelegt ist, Prozessdaten einer Maschine aufzunehmen.

Vorzugsweise umfasst das System ferner ein Mittel zur Informationsausgabe für den Einsatz-Koordinator. Bspw. kann das Mittel zur Informationsausgabe eine Tablet sein. Es weist einen Zugriff auf die Datenbank auf und ist dazu ausgelegt, relevante Informationen über eine Arbeitsmaschine bereitzustellen und durch einen Vergleich von Planungsdaten mit aktuellen Daten eine Abweichung eines Ablaufschritts vom Arbeitsplan festzustellen. Das System ist dazu ausgelegt Prozess-, Zustands- und Steuerparameter einer zur realen Umsetzung des Arbeitsplans verwendeten Maschine entgegenzunehmen und mit dem in der Datenbank abgelegten Arbeitsplan zu vergleichen. Ferner kann das System verwendet werden, um den Maschinenbediener durch den Arbeitsplan der Maschine zu navigieren und ihm Zusatzinformationen anzuzeigen.

Typischerweise ist das Mittel zur Informationsausgabe als mobiles Gerät, ausgeprägt und überträgt die relevanten Informationen von der Maschine und der Datenbank über ein Kommunikationsmodul (z.B: WLAN / GSM). Dabei können der Arbeitsplan mit den aktuellen Daten verglichen werden, sodass ein Koordinator Abweichungen frühzeitig erkennt und entsprechende Gegenmaßnahmen vorsehen kann. Als Beispiel ist hierbei ein Tandem-/Mehrfachhub zu nennen, bei dem die Arbeit eines Koordinators unter Rückgriff auf die von dem Mittel zur Informationsausgabe bereitgestellten Informationen entscheidend vereinfacht wird. Zudem ist denkbar, dass über dieses Mittel Informationen über den Aufbau, den Betrieb und die Wartung einer Maschine bereitgestellt werden.

Nach einer weiteren Fortbildung der Erfindung ist das System dazu ausgelegt, sämtliche Informationen für die jeweiligen Mittel auf Grundlage einer gemeinsamen Datenbasis zu erzeugen und sämtliche hieraus erzeugten Informationen in die gemeinsame Datenbasis einzupflegen, um Divergenzen in der zur Informationserzeugung herangezogenen Datenbasis zu vermeiden.

Vorzugsweise umfasst der Arbeitsplan eine Abfolge mehrerer Arbeitsschritte, die in ihrer Gesamtheit zur Fertigstellung des geplanten Arbeitsprozesses beitragen. Dabei können einem Arbeitsplan mehrere Maschinen zugewiesen sein, die zur Durchführung des jeweiligen Arbeitsschritts geeignet sind.

Gemäß einer weiteren Modifikation der Erfindung umfasst ein Arbeitsschritt ferner die Position zur Durchführung des Arbeitsschritts auf dem Gelände des Arbeitsprozesses und/oder weitere auf den Ablaufschritt bezogene Parameter, die insbesondere einen Bodendruck, eine Traglast, einen Abstand zur Umgebung als Parameter enthalten.

Vorzugsweise ist das Mittel zur Simulation des Arbeitsplans mit einem Simulator verbunden, der eine Maschine simuliert, um die im Arbeitsplan vorgesehenen Arbeitsschritte mit Hilfe des Simulators zu simulieren und anschließend zu optimieren. Dabei ist es von Vorteil bei der Simulation auftretende Probleme zu erkennen und den Arbeitsplan entsprechend anzupassen. Von Vorteil ist, wenn der Simulator die zur Durchführung des Arbeitsplans vorgesehene Maschine in der jeweiligen Konfiguration simuliert. Der Simulator kann dabei die für den Arbeitsschritt geeignete Maschine simulieren und verfügt über die gleiche Steuerung wie die simulierte Maschine, sowie gleiche Bedieneinheiten (wie z.B: Joystick, Tastatur, Bildschirm). Durch die Interaktion mit einem Bediener wird dieser bei der Simulation bereits im Vorfeld auf kritische Aufgaben vorbereitet und kann durch seine Erfahrung Verbesserungen des Arbeitsplans aufzeigen, die dann vorzugsweise über das Mittel der Planung eingeführt werden sollten.

Die Informationen des Mittels zur Navigation und Steuerungsunterstützung werden direkt über eine Anzeigeeinheit in der Bedienkabine dem Gerätebediener zugeführt. Vorzugsweise passiert dies im Wege einer "Augmented Reality"-Darstellung, in der die reale Umgebung zusammen mit Zusatzinformationen in einer Anzeigeeinheit dargestellt werden.

In diesem Zusammenhang ist es auch vorteilhaft, wenn während der Durchführung eines Arbeitsschritt des Arbeitsplans durch eine Maschine, das Mittel zur Aufnahme von Prozessdaten einer Maschine dazu ausgelegt ist, Parameter über die tatsächliche Anwendung der Maschine zu erfassen und in der Datenbank abzulegen. Dies ermöglicht die Analyse zwischen dem Soll- und dem Istwert des Ablaufschritts in dem Bauplan.

Nach einer weiteren Fortbildung der Erfindung ist das Mittel zur Analyse dazu ausgelegt, anhand der vorliegenden Daten der Datenbank eine Optimierung zukünftiger Arbeitsschritt eines Arbeitsplans effizienter zu gestalten.

### Figuren

Nachfolgend wird mit Hilfe von Figuren detailliert auf einzelne Ausführungsformen der vorliegenden Erfindung eingegangen. Dabei zeigen:
- Fig. 1:: eine Übersicht der Funktionen des erfindungsgemäßen Systems zur digitalen Unterstützung eines Arbeitsprozesses, und
- Fig. 2:: eine Darstellung zur Erläuterung eines konkreten Einsatzszenarios der Erfindung näher darstellt.

### Beschreibung der Figuren

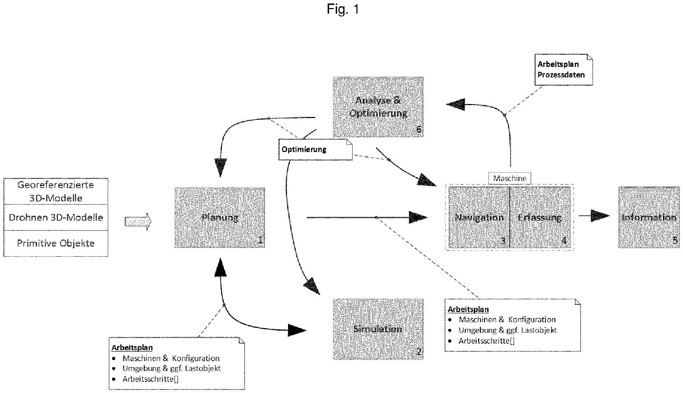

Fig. 1 zeigt das System mit seinen mehreren Mitteln. Man erkennt das erste Mittel 1, zur Planung eines Arbeitsprozesses. So ist es möglich, mit Hilfe von Drohnen, einem georeferenzierten, dreidimensionalen Modell, Daten einzugeben, um digitale Vermessungsdaten des Geländes, auf dem der Arbeitsprozess stattfinden soll zu hinterlegen. Diese digitalen Daten dienen als Grundlage für die Planung des Arbeitsprozesses.

Nach Fertigstellung der Planung, kann mit Hilfe des Mittels 2 zur Simulation eine Simulation des Arbeitsplans vorgenommen werden. Dabei wird von dem Mittel zur Planung 1 an das Mittel zur Simulation 2 beispielsweise das dreidimensionale Modell der Umgebung, die zu simulierenden Arbeitsschritte inklusive der dabei relevanten Parameter, wie Position und Winkel der Maschine, Traglast, Bodendruck etc. weitergegeben. Dies erfolgtüber ein Ablegen von Daten in der Datenbank.

Das Mittel 3 dient zur Navigation und Steuerungsunterstützung einer Maschine bei der realen Umsetzung des Arbeitsprozess. Dabei werden also bereits die vorzugsweise in einer Simulation durchgespielten Arbeitspläne in der Realität ausgeführt. Um einen Bediener einer Maschine zu unterstützen, ist das Mittel 3 dazu ausgelegt, Unterstützungsdaten, insbesondere Fahrassistenzdaten, dem Fahrer anzeigen zu lassen. So kann beispielsweise dem Bediener der Maschine angezeigt werden, an welchem Ort der nächste Arbeitsschritt der Maschine durchzuführen ist, oder welche Steuerungsfunktion als nächstes auszuführen ist. Auch können die anzusteuernde Richtung der Maschine, Informationen über den nächsten Arbeitsschritt und/oder weitere hilfreiche Informationen angezeigt werden.

Ganz konkret kann dies beispielsweise bedeuten, dass ein Maschinen-Bediener angezeigt bekommt, welchen Wippwinkel der Hauptausleger nehmen muss, um den nächsten Arbeitsschritt im Arbeitsplan auszuführen. Selbstverständlich sind die Steuerungsunterstützungsinformationen nicht auf einen Kran oder auf das Schwenken eines Hauptauslegers beschränkt, sondern können sämtliche relevante Steueraktionen einer Maschine umfassen.

Um die Informationen der Navigations- und Steuerungsunterstützung der Maschine zukommen zu lassen, werden im Wesentlichen ähnliche Daten wie an das Mittel 2 zur Simulation weitergegeben. Anstelle einer Simulation durch einen verbundenen Simulator erfolgt nun hingegen die reale Umsetzung der Arbeitsschritte eines Arbeitsplans durch einen Bediener bzw. durch die von dem Bediener bediente Maschine.

Das Mittel 4 zur Erfassung von Zustands- und Steuerparametern einer Maschine ist dazu ausgelegt, bei Ausführung eines Arbeitsschritts des Arbeitsplans eine Vielzahl von Prozessdaten der Maschine aufzunehmen.

Bezogen auf das vorhin eingeführte Beispiel eines Krans als Maschine würde dies bedeuten, dass das Mittel 4 zur Prozessdatenerfassung sämtliche Zustandsparameter eines Krans, wie Drehwinkel des Oberwagens, Wippwinkel des Haupt- und/oder Nadelauslegers, Position des Hakens und dergleichen an das Mittel 6 zur Analyse übermittelt, sodass das System eine wie vorstehend beschriebene Analyse ausführen kann.

Nach Durchführung dieser Analyse werden die daraus gezogenen Rückschlüsse an das Mittel 1 zur Planung weitergereicht, um eventuell fehlgeplante Ablaufschritte in dem Arbeitsplan zu korrigieren.

Darüber hinaus gibt es ein Mittel 5 zur Informationsausgabe, die relevante Informationen über eine Maschine bereitstellt und durch einen Vergleich von Planungsdaten mit aktuellen Daten eine Abweichung eines Arbeitsschritts vom Arbeitsplan erkennbar macht. Dieses Mittel kann durch ein Tablet verwirklicht sein. Dadurch ist es einem Koordinator, der die korrekte Umsetzung des Arbeitsplans überwacht, in besonders einfacher Art und Weise möglich Abweichungen vom Sollzustand sofort zu erkennen und entgegenzuwirken.

Nach einer vollständigen Erstellung des Arbeitsplans kann dieser in Form eines Protokolls durch das Mittel der Planung exportiert werden.

Die Ergebnisse der Simulation bzw. der Analyse, die nach Durchführung eines Ablaufschritts stattfindet, können erneut Eingang in die Datenbank bzw. die einzelnen Arbeitsschritte des Arbeitsplans finden. Hierbei kann dann die Maschinen Konfiguration optimiert werden, bzw. ein optimaler Abstand, eine optimale Traglastauslastung und/oder ein optimaler Bodendruck erreicht werden. Vorteilhaft ist, dass die Planung 1:1 beim Bediener ankommt, der Plan simuliert werden kann und eine Abstimmung über den Arbeitsplan für alle Beteiligten mittels einer Visualisierung bereitgestellt werden kann.

Dem Fachmann ist klar, dass mit Hilfe des erfindungsgemäßen Systems zur digitalen Unterstützung eines Arbeitsprozesses die im Stand der Technik bekannten Nachteile überwunden werden.

### Anwendungsbeispiel

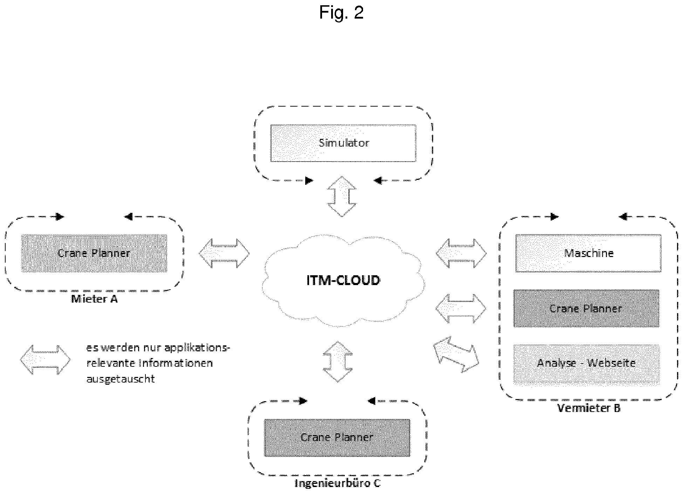

Im Folgenden wird ein beispielhaftes Szenario zur Veranschaulichung der vorliegenden Erfindung anhand der Fig. 2 dargestellt.

Die Cloud bzw. die Datenbank wird als zentraler Datenspeicher und Austauschpunkt zwischen den verschiedenen Mitteln verwendet. Sie organisiert die Datenverteilung - und -Aktualisierung, bzw. den Zugriff und Austausch von Daten und Projekten. Über sie können Projekte zwischen unterschiedlichen Partnern (sequentiell -> also Projektnutzung nacheinander oder kooperativ bei einem gleichzeitigen Arbeiten am Projekt) ausgetauscht werden.

Der potentielle Auftraggeber arbeitet mit einer Version des Planungstools (Mittel zur Planung, in der Zeichnung als "Crane Planner" bezeichnet) und definiert dabei bspw. seine Hubaufgabe (40t auf 35m Höhe bei 16m Ausladung). Er speichert das Projekt in der Datenbank und gibt es dem potentiellen Auftragnehmer B frei. B öffnet das Projekt und detailliert die Planung bzw. das Projekt. B erstellt ferner eine Animation und ein erstes Projekt für A. Der Mieter A ist überzeugt und vergibt den Hub-Auftrag an den Vermieter B.

B möchte sich absichern und das Projekt noch mit dem externen Ingenieurbüro C besprechen. B startet einen ,kooperativen Projekt-Modus' und lädt C dazu ein. Damit sehen sowohl B und C das Projekt und alle Änderungen gleichzeitig. Beide können Änderungen am Projekt vornehmen. Möchte B seinen Maschinen-Bediener auf die komplizierte Hub-Aufgabe vorbereiten, wird dazu das überarbeitete Projekt an den nächstgelegenen Simulator gesendet.

Somit ist möglich, dass der Fahrer das geplante Projekt testet und bemerkt, dass er mit der Planung nicht einverstanden ist. Seine Änderungswünsche werden dann vorzugsweise vom Vermieter B in das Projekt eingearbeitet.

Der Vermieter B präsentiert das Projekt mit Hilfe eines Tablets oder eines sonstigen mobilen Geräts direkt auf der Baustelle noch mit dem Fahrer und den restlichen Beteiligten. Sobald die Maschine für den Einsatz entsandt wird, wird das Projekt auf die Maschine übertragen. Der Fahrer startet die Maschine und erhält eine Arbeitsschrittliste (inkl. dem Aufrichten/Montage), die er auszuführen hat.

Im Plan ist der Hub eines 40t schweren Objekts vorgesehen. Auf der Baustelle bemerkt der Fahrer beim Anhängen der Last, dass diese 42t schwer ist. Durch die Nutzung der Erfindung ist möglich, dass er mit dem Planer Rücksprache hält. Dieser aktualisiert die Masse des Lastobjekts auf 42t und prüft die Abhängigkeiten dieser Anpassung. Er überträgt das aktualisierte Projekt erneut auf die Maschine. Die Maschine zeigt dem Fahrer das SOLL mit 42t und das IST mit 42t an. Dadurch ist sichergestellt, dass der weitere Hub problemfrei verläuft.

Im Nachgang ist es möglich, den Hub zu analysieren. Dabei kann erkannt werden, dass der Fahrer sich nicht an den Plan gehalten hat und ein Fahrproblem beispielweise zu ruckartiges Anheben der Last, Pendelbewegungen,... hat. Es ist möglich, ein Fahrproblem-angepasstes Training vorzubereiten und den Fahrer erneut in den Simulator zu entsenden.

## Patentansprüche

1. System zur digitalen Unterstützung eines Arbeitsprozesses, umfassend:
eine Datenbank zur Aufnahme von verschiedenen Daten und Datentypen,
ein Mittel zur Planung eines Arbeitsprozesses, das einen Zugriff auf die Datenbank aufweist und dazu ausgelegt ist, einen Arbeitsplan in der Datenbank abzulegen, wobei der Arbeitsplan vorzugsweise die Konfiguration einer Maschine, eine Beschreibung der Arbeitsumgebung und mehrere Ablaufschritte umfasst,
ein Mittel zur Analyse des Arbeitsplans, das anhand der vorliegenden Daten der Datenbank eine Analyse durchführt, um eine Optimierung des in der Datenbank abgelegten Arbeitsplans, insbesondere einzelner Ablaufschritte des Arbeitsplans vorzunehmen,
ein Mittel zur Simulation des Arbeitsplans, das einen Zugriff auf die Datenbank aufweist und dazu ausgelegt ist, Daten zur Simulation des Arbeitsplans auszugeben,und
ein Mittel zur Navigations- und Steuerungsunterstützung einer Maschine, das einen Zugriff auf die Datenbank aufweist und dazu ausgelegt ist, während und/oder vor der realen Umsetzung des Arbeitsplans spezifische Daten des Arbeitsplans aus der Datenbank an eine zugehörige Maschine zu übermitteln.

2. System nach Anspruch 1, wobei das Mittel zur Navigations- und Steuerungsunterstützung einer Maschine ferner dazu ausgelegt ist, Prozess-, Zustands- und Steuerparameter einer zur realen Umsetzung des Arbeitsplans verwendeten Maschine entgegenzunehmen und mit dem in der Datenbank abgelegten Arbeitsplan zu vergleichen, um einen Maschinenbediener durch den Arbeitsablauf der Maschine zu navigieren und ihm Zusatzinformationen anzuzeigen.

3. System nach einem der vorhergehenden Ansprüche, ferner umfassend ein Mittel zur Informationsausgabe, das einen Zugriff auf die Datenbank aufweist und dazu ausgelegt ist, relevante Informationen über den Arbeitsprozess oder eine zur Umsetzung des Arbeitsplans verwendete Maschine bereitzustellen und durch einen Vergleich von Planungsdaten mit aktuellen Daten eine Abweichung vom Arbeitsplan wiederzugeben.

4. System nach einem der vorhergehenden Ansprüche, wobei das System dazu ausgelegt ist, sämtliche Informationen für die zugehörigen Mittel auf Grundlage einer gemeinsamen Datenbasis zu erzeugen, um Abweichungen in der den Mitteln zur Verfügung gestellten Datenbasis zu vermeiden.

5. System nach einem der vorhergehenden Ansprüche, wobei der Arbeitsplan eine Abfolge mehrerer Ablaufschritte für eine Maschine umfasst, die zur Durchführung des Ablaufschritts geeignet ist.

6. System nach einem der vorhergehenden Ansprüche, wobei der Ablaufplan ferner die Position einer Maschine zur Durchführung eines Ablaufschritts auf dem Gelände des Arbeitsprozesses und/oder weitere auf den Ablaufschritt bezogene Parameter der Maschine umfasst, wobei der auf den Ablaufschritt bezogene Parameter vorzugsweise ein Hebe-Einsatz ist, das insbesondere einen Bodendruck, eine Traglast, einen Abstand zur Umgebung als Parameter enthält.

7. System nach einem der vorhergehenden Ansprüche, wobei das Mittel zur Simulation des Arbeitsplans mit einem Simulator verbindbar oder verbunden ist, der eine zum Abarbeiten des Arbeitsprozesses verwendete Maschine simuliert, um die im Arbeitsplan vorgesehenen Ablaufschritte mit Hilfe des Simulators auszuführen, wobei vorzugsweise bei der Simulation auftretende Probleme eine Anpassung der in dem Arbeitsplan ausgeführten Ablaufschritte nach sich ziehen.

8. System nach einem der vorhergehenden Ansprüche, wobei das Mittel zur Navigation und Steuerungsunterstützung bei der realen Umsetzung des Arbeitsplans die einzelnen Ablaufschritte des Arbeitsplans an eine zugehörige Maschine übermittelt, vorzugsweise die genaue Position oder einen Verfahrweg der zugehörigen Maschine, die genaue Tätigkeit, die mit der Maschine auszuführen ist, und/oder Zusatzinformationen über den Ablaufschritt einem Bediener der Maschine zukommen lässt.

9. System nach einem der vorhergehenden Ansprüche, wobei die zur Umsetzung des Ablaufplans zu verwendende Maschine ein Raupenkran, ein Hydroseilbagger, ein Ramm- oder Bohrgerät, ein Offshore-Kran, ein Schiffskran und/oder ein Hafenmobilkran ist.

10. System nach einem der vorhergehenden Ansprüche, wobei, falls Hinweise auf eine Minderleistung der Maschine erkannt werden, das System dazu ausgelegt ist, eine Fehlermeldung auszugeben, die vorzugsweise eine Reparatur der Maschine oder einen Hinweise auf eine unsachgemäße Bedienung der Maschine durch den Bediener nach sich zieht.

11. System nach einem der vorhergehenden Ansprüche, wobei das Mittel zur Analyse anhand der vorliegenden Daten der Datenbank eine Optimierung von Ablaufschritten eines Arbeitsplan durchführt, um eine Maschinenposition, eine Maschinenbewegung, eine Verfahrgeschwindigkeit der Maschine und/oder die Konfiguration der Maschine zu optimieren, wobei vorzugsweise die optimierten Ablaufschritte in der Datenbank abgelegt werden.

12. System nach einem der vorhergehenden Ansprüche, wobei die Datenbank eine cloudbasierte Datenbank ist.
